# EUROPÄISCHE PATENTSCHRIFT

(11) **EP 4 289 324 B1**
(45) Veröffentlichungstag und Bekanntmachung des Hinweises auf die Patenterteilung: **09.07.2025**
(21) Anmeldenummer: 23174928.4
(22) Anmeldetag: 23.05.2023
(51) Int. Cl.: A47L 11/40, A47L 9/28

(54) **LANGZEITLAGERUNG EINES ROBOTERS MIT BATTERIE**
LONG-TERM STORAGE OF A ROBOT WITH BATTERY
STOCKAGE À LONG TERME D'UN ROBOT AVEC BATTERIE

(30) Priorität: 07.06.2022 DE 102022205782
(43) Veröffentlichungstag der Anmeldung: 13.12.2023
(73) Patentinhaber: BSH Hausgeräte GmbH, 81739 München (DE)
(72) Erfinder: Moelter, Markus, 97618 Hollstadt (DE); Schnitzer, Frank, 97616 Bad Neustadt (DE); Mack, Jürgen, 73035 Göppingen (DE)

(56) Entgegenhaltungen:
- DE-A1- 10 202 332
- US-A1- 2022 077 692

## Beschreibung

Die Erfindung betrifft einen Roboter mit einem Batteriemodul. Das Batteriemodul enthält eine Batterie sowie einen Batteriemanager zur Überwachung bzw. Verwaltung der Batterie. Insbesondere werden als Roboter hier Haushaltsroboter betrachtet, zum Beispiel autonome Saug- und/oder Wisch- oder Mähroboter. Problematisch dabei ist die Selbstentladung des Batteriemoduls während längerer Zeiten der Nichtbenutzung des Roboters. Eine vergleichsweise hohe Entladung findet dabei statt, da derartige Batteriemanager komplexe Überwachungsaufgaben an der Batterie erfüllen und somit einen vergleichsweise hohen Eigenbedarf an elektrischer Energie haben, welcher aus der Batterie zu decken ist.

So kann es beispielsweise sein, dass eine Batterie bereits vollständig entladen ist, wenn ein neu produzierter Roboter nach längerer Lagerungszeit beim Hersteller/Vertreiber den Endkunden erreicht. Im schlimmsten Fall ist die Batterie dabei tief entladen und das Batteriemodul dadurch defekt.

Aus der EP 3 440 974 A1 ist ein Batteriepack für einen Staubsauger bekannt, umfassend ein Batterie-Management-System (BMS) und eine Aufweckschaltung mit einem Beschleunigungssensor, wobei das Batterie-Management-System (BMS) mindestens einen Betriebsmodus, in dem Batteriestrom für den Staubsauger zur Verfügung gestellt wird, und einen Schlafmodus aufweist, in dem kein Batteriestrom für den Staubsauger zur Verfügung gestellt wird, und die Aufweckschaltung dazu eingerichtet ist, basierend auf einem von dem Beschleunigungssensor erfassten ersten Beschleunigungsmuster das Batterie-Management-System (BMS) von dem Schlafmodus in den Betriebsmodus umzuschalten.

Aus der DE 10 2019 108 571 A1 ist ein Staubsauger bekannt mit einem Akkumulator bzw. einer wiederaufladbaren Batterie, die zur Energieversorgung des Staubsaugers ausgebildet ist und ein Batterie-Management-System aufweist, das zur Überwachung, und Steuerung oder Regelung der Batterie ausgebildet ist, einem Beschleunigungssensor, einer Ladezustandsanzeige, die ausgebildet ist, einen Ladezustand der Batterie anzuzeigen, mindestens einer Kommunikationsleitung, die ausgebildet ist, den Ladezustand von der Batterie an die Ladezustandsanzeige zu übermitteln, und einer Geräte-Elektronik, die ausgebildet ist, wenn der Beschleunigungssensor keine Bewegung sensiert und/oder wenn die Batterie vollständig aufgeladen ist, die Batterie nach Ablauf einer vorbestimmten Zeit, in der das nicht Bewegen und/oder das vollständige Aufladen der Batterie sensiert wird, in einen Schlafmodus zu versetzen, in dem die Ladezustandsanzeige abgeschaltet ist, und wenn der Beschleunigungssensor eine Bewegung sensiert, die Batterie in einen Wachmodus zu versetzen, in dem die Ladezustandsanzeige angeschaltet ist und einen von dem Batterie-Management-System über die mindestens eine Kommunikationsleitung übermittelten Ladezustand anzeigt.

Aus der WO 2010 / 045588 A1 ist ein kabelloses, batteriebetriebenes System von Reinigungsprodukten bekannt. Das System von Reinigungsprodukten umfasst Geräte wie zum Beispiel aufrecht stehende Staubsauger (z. B. einen Stabstaubsauger, einen leichten aufrecht stehenden Staubsauger usw.), einen Handstaubsauger, einen Teppichreiniger, einen Kanisterstaubsauger und dergleichen. Jedes der Geräte wird von einem Batteriepack gespeist, das zwischen den Geräten austauschbar ist. Das Batteriepaket umfasst eine Kombination aus Hardware und Software zum Verbinden mit, Identifizieren von und Kommunizieren mit den Reinigungsprodukten, um sicherzustellen, dass jedes der Produkte die Energie erhält, die für eine optimale Leistung erforderlich ist.

Die US 2022/077692 A1 offenbart eine Batterieschaltung mit einem "deep sleep wake-up subcircuit".

Aufgabe der vorliegenden Erfindung ist es, Verbesserungen in Bezug auf in Rede stehende Roboter vorzuschlagen.

Die Aufgabe wird gelöst durch einen Roboter gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren. Der Roboter ist insbesondere ein Haushaltsroboter, zum Beispiel ein autonomer Saug- und/oder Wisch- oder Mähroboter.

Der Roboter enthält ein Batteriemodul. Das Batteriemodul dient zur Energieversorgung des Roboters mit elektrischer Energie, insofern handelt es sich um einen autonom ohne externe Energieversorgung arbeitsfähigen Roboter. Das Batteriemodul enthält eine wiederaufladbare Batterie, also einen Akkumulator bzw. vergleichbaren Energiespeicher.

Das Batteriemodul enthält einen Batteriemanager, der dazu dient bzw. eingerichtet ist, die Batterie zu verwalten. Ein derartiger Batteriemanager wird auch "Batteriemanagementsystem (BMS)" genannt. Der Batteriemanager dient damit zur Überwachung der Batteriezellen, insbesondere deren Strom, Spannung und Temperatur. Der Batteriemanager dient auch der Pflege, dem Lade- / Entlademanagement der Batteriezellen usw.

Bei dem Batteriemanager handelt es sich um einen sogenannten tiefschlaffähigen Batteriemanager, der dazu eingerichtet ist, auf ein Schlafsignal hin das Batteriemodul in einen Tiefschlafmodus zu setzen. Der Batteriemanager ist auch dazu eingerichtet, auf ein Wecksignal hin den Tiefschlafmodus zu beenden.

Der Roboter ist dazu eingerichtet, das Wecksignal ohne die Nutzung von Energie aus der Batterie zu erzeugen. "Ohne Energie aus der Batterie" ist so zu verstehen, dass hierdurch nicht eine eigentliche Wake-Up-Routine innerhalb des Batteriemanagers zu verstehen ist. Diese ist in der Regel tatsächlich von der Batterie versorgt. Gemeint ist hier jedoch ein Wecksignal bzw. ein Weckimpuls, der von außerhalb des Batteriemanagers bzw. des Batteriemoduls zugeführt wird. Dieses Wecksignal ist hier alleine von außerhalb der Batterie erzeugt.

Das Wecksignal ist insbesondere ein Beschalten einer speziellen Weckleitung am Batteriemodul, zum Beispiel das Anlegen von Strom oder Spannung an dieser Weckleitung, gegebenenfalls auch das Beschalten eines Eingangs am Batteriemodul / Batteriemanager zu Masse hin, wobei auch dies so erfolgt, dass eine Energieentnahme aus der Batterie dabei nicht erfolgt. Das Wecksignal kann auch dadurch erzeugt werden, dass schlicht Strom oder Spannung am Batteriemodul bzw. einem Leistungseingang des Batteriemoduls angelegt wird, welcher zum regulären Laden der Batterie mit elektrischer Energie dient. Der Batteriemanager detektiert dann das entsprechende Anliegen der (Lade-)Spannung bzw. das Fließen des (Lade-)Stromes und verlässt daraufhin den Tiefschlafzustand. Der Signalimpuls / dessen Energie für das Wecksignal erfolgt also von extern, ohne hierzu Energie aus der Batterie zu entnehmen.

Die Energie zur Erzeugung des Wecksignals stammt insbesondere aus einer von der Batterie verschiedene Hilfsbatterie, z.B. aus einer Zusatzschaltung des Roboters, die die extra, d.h. von der Batterie verschiedene, Hilfsbatterie enthält, z.B. eine AA-, D-, 9V-Block-Batterie. Die Hilfsbatterie ist z.B. ein Lithium-Ionen-Akku in einem Display / -modul des Roboters, die Aktivierungsenergie für das Wecksignal wird hierbei dann aus der Hilfsbatterie genommen.

Alternativ ist eine Abzweigschaltung der Hilfsbatterie vorgesehen, die z.B. über ein Bedienelement (siehe unten, z.B. User Interface) aktiviert wird und einen kleinen Ladestrom an das Batteriemodul liefert, das dann dadurch aufwacht. Hierbei ist das Wecksignal also die Versorgung des Batteriemoduls mit Ladeenergie, siehe sinngemäß unten die Versorgung aus der Schnittstelle / Ankoppeln an die Ladestation / Basisstation.

Dies sind alternative Methoden zum Aufwecken des Batteriemoduls zu dem Ankoppeln / Aufsetzen des Roboters auf eine Lade- / Basisstation (Kopplung Schnittstelle an Gegenschnittstelle, siehe unten).

Gemäß der Erfindung wird erreicht, dass seitens der Batterie keinerlei elektrische Energie nach außerhalb des Batteriemoduls zur Verfügung gestellt werden muss, um den Tiefschlafmodus zu beenden bzw. eine Beendigungsfunktionalität bereitzustellen. Somit können auch keinerlei versehentliche Stromflüsse, Stromleckagen oder ähnliches auf diesem Wege entstehen, die zu einer unbeabsichtigten / vergleichsweise schnellen Entladung der Batterie führen könnten.

In einer bevorzugten Ausführungsform enthält der Roboter ein Eingabemodul. Das Eingabemodul ist von einem Benutzer bedienbar. Der Roboter ist dazu eingerichtet, das Schlafsignal dann zu erzeugen, wenn am Eingabemodul eine Schlafeingabe erfolgt. Die Schlafeingabe ist dabei vom Benutzer tätigbar, kann also von diesem ausgeführt werden, stellt also eine Bedienung, Veranlassung, Ansteuerung am Eingabemodul, also das Erzeugen eines Schlafbefehls dar. Insbesondere erfolgt die Schlafeingabe tatsächlich durch willentliche Bedienung des Eingabemoduls durch den Benutzer. Mit anderen Worten tätigt der Benutzer die Schlafeingabe, indem er das Eingabemodul bedient und woraufhin das Schlafsignal im Roboter erzeugt wird, wodurch das Batteriemodul in den Tiefschlafmodus gesetzt wird. Zwar ist es denkbar, dass die Schlafeingabe versehentlich durch den Benutzer oder anderweitig erzeugt wird, dies ist aber durch geeignete Maßnahmen möglichst unterbunden, siehe unten.

In einer bevorzugten Variante dieser Ausführungsform enthält das Eingabemodul wenigstens ein Bedienelement. Das Bedienelement ist von einem bzw. dem oben genannten Benutzer, insbesondere manuell, betätigbar. Eine tatsächliche Betätigung des Bedienelements ist dann wenigstens ein Bestandteil der Schlafeingabe. "Bestandteil" ist so zu verstehen, dass noch andere Aktionen nötig / Bedingungen erfüllt sein müssen, um eine vollständige Schlafeingabe darzustellen, z.B. der Empfang eines Funksignals von außerhalb des Roboters, siehe unten. Insbesondere ist die Schlafeingabe jedoch vollständig durch die Betätigung des Bedienelements bewerkstelligt.

Mit anderen Worten bedarf es einer Betätigung / Aktivierung / Bedienung, insbesondere manuellen bzw. händischen Bedienung des Bedienelements, um die Schlafeingabe durchzuführen. Das Schlafsignal wird dabei entweder vom Bedienelement selbst und/oder von einer dem Bedienelement zugeordneten Steuerung des Roboters erzeugt und an das Batteriemodul übermittelt. Ohne Betätigung des Bedienelements wird dann kein Schlafsignal erzeugt.

In einer bevorzugten Variante dieser Ausführungsform enthält das Eingabemodul wenigstens zwei Bedienelemente. Eine Betätigung mehrerer der Bedienelement nach einem bestimmten Bedienmuster ist dabei wenigstens ein Bestandteil der Schlafeingabe oder bildet die Schlafeingabe, wie sinngemäß oben bereits erläutert. Mit anderen Worten müssen mehrere Bedienelemente nach einem bestimmten Bedienmuster betätigt werden, um die Schlafeingabe zu bewirken. Eine versehentliche Betätigung eines einzigen Bedienelements wird damit ausgeschlossen. Ein entsprechendes Bedienmuster ist beispielsweise die Betätigung zweier Bedienelemente gleichzeitig und / oder die Betätigung verschiedener Bedienelemente in einer bestimmten Reihenfolge innerhalb bestimmter Zeitvorgaben usw. Je komplexer das Bedienmuster ist, desto weniger wahrscheinlich wird eine versehentliche Eingabe einer Schlafeingabe.

Das / die Bedienelemente haben insbesondere die Funktionalität der Schlafeingabe nur als Sonderfunktion. Regulär weisen sie eine andersartige Bedien-Funktionalität am Roboter auf, z.B. die Einstellung einer Saugstärke, Kopplung mit einer Basisstation, Aktivierung von Signaltönen am Roboter usw., was hier nicht näher erläutert werden soll. Insbesondere wirkt das Eingabemodul wieder wie oben bereits sinngemäß erläutert mit einer Steuerung zusammen, welche ein entsprechendes Bedienmuster erkennt, auswertet und die entsprechende Schlafeingabe in ein Schlafsignal umwandelt bzw. dieses freischaltet. Alternativ kann das Eingabemodul eine entsprechende Auswertung der Bedieneingaben / Überprüfung des Bedienmusters und Signalerzeugung selbst übernehmen.

In einer bevorzugten Variante dieser Ausführungsform enthält das Eingabemodul einen Signalempfänger. Der Signalempfänger ist dazu eingerichtet, ein von einem Benutzer erzeugbares Eingabesignal zu empfangen. Der Roboter ist dazu eingerichtet, das Schlafsignal dann zu erzeugen, wenn das Eingabesignal empfangen wird. Der Empfang des Eingabesignals folgt also wenigstens einem Bestandteil einer Schlafeingabe bzw. erfolgt durch eine Schlafeingabe, die das Eingabesignal erzeugt bzw. sendet. Mit anderen Worten bedarf es hier des (Sendens und) Empfangens des Eingabesignals, um das Schlafsignal zu erzeugen und somit den Tiefschlafmodus im Batteriemodul auszulösen bzw. zu starten. Eine versehentliche Erzeugung eines entsprechenden Eingabesignals kann in der Regel besonders wirkungsvoll verhindert werden, da hier signaltechnische Schutzmaßnahmen usw. ergriffen werden können.

In einer bevorzugten Variante dieser Ausführungsform ist der Signalempfänger ein Drahtlosempfänger und das Eingabesignal ein Drahtlossignal. Entsprechende Empfänger bzw. Signale sind zum Beispiel auf Funkbasis oder Infrarotbasis denkbar. Ausprägungen sind z.B. WiFi, WLAN, Bluetooth, Mobilfunk, etc.

In einer bevorzugten Variante dieser Ausführungsform ist der Signalempfänger dazu eingerichtet, das Eingabesignal von einem Bediengerät zu empfangen. Das Bediengerät ist dabei vom Roboter verschiedenen. Das Bediengerät ist von einem Benutzer mit der bzw. in Form der Schlafeingabe bedienbar.

So ist zum Beispiel der Drahtlosempfänger dazu eingerichtet, mit einem Bediengerät per Funk zu kommunizieren. Das Eingabesignal wird dabei beispielsweise durch Druck auf eine reale oder virtuelle "Taste" des bzw. am Bediengerät erzeugt. Durch entsprechende Sicherungsmechanismen am Bediengerät / Übertragungsweg kann besonders gut sichergestellt werden, dass keine Fehlauslösung oder versehentliche Auslösung des Schlafsignals erfolgt.

In einer bevorzugten Variante dieser Ausführungsform ist das Bediengerät ein handgeführtes (vom Benutzer handführbares) Bediengerät. Insbesondere handelt es sich dabei um ein Smartphone, einen Tablet-Computer, PC, Laptop usw. Das Eingabesignal wird dabei insbesondere von einer auf dem entsprechenden Bediengerät ausgeführten oder auszuführenden Applikation (z.B. "App" auf einem Smartphone) erzeugt, welches die Schlafeingabe entgegennimmt. Insbesondere ist das Bediengerät dazu eingerichtet, das Eingabesignal als Drahtlossignal zu erzeugen. Insbesondere ist das Bediengerät dazu eingerichtet, das Eingabesignal anhand der Bedienung eines Programms (Applikation) des Bediengerätes zu erzeugen. Insbesondere ist das Programm durch einen Benutzer bedienbar. Insbesondere ist die Kopplung eines Roboters mit einer entsprechenden App auf einem Smartphone heute gängige Praxis, sodass diese Erfindungsvariante besonders einfach umzusetzen ist.

In einer bevorzugten Ausführungsform enthält der Roboter eine elektrische Schnittstelle. Die elektrische Schnittstelle ist dazu eingerichtet, das Batteriemodul mit elektrischer Energie zu versorgen. Die elektrische Energie wird dabei dem Roboter von außerhalb des Roboters an der Schnittstelle bereitgestellt. Die elektrische Schnittstelle dient insbesondere zum Laden des Batteriemoduls bzw. der Batterie. Die entsprechende Energie kommt von außerhalb des Roboters. Der Roboter ist dazu eingerichtet, das Wecksignal dann zu erzeugen, wenn die Schnittstelle mit elektrischer Energie versorgt wird.

Gemäß dieser Ausführungsform ist es besonders wirkungsvoll vermieden, zum Verlassen des Tiefschlafzustandes Energie aus der Batterie zu benötigen, da ausreichend Energie über die elektrische Schnittstelle zur Verfügung steht, um betreffende Schaltsignale am Batteriemanager zu erzeugen oder zumindest keine Batterie-Energie notwendig ist, um die entsprechende Schaltinformation zum Batteriemodul zu bringen.

In einer bevorzugten Ausführungsform ist daher die elektrische Energie für die Erzeugung des Wecksignals (sofern eine solche benötigt wird) insbesondere ausschließlich von der Schnittstelle bereitgestellt.

In einer bevorzugten Ausführungsform ist der Batteriemanager dazu eingerichtet, im Tiefschlafmodus wenigstens in zeitlichen Intervallen lediglich eine Überwachung einer Spannung und oder einer Temperatur der Batterie durchzuführen. Derartige Tiefschlafmodi sind in Batteriemanagern oft vorzufinden und zeichnen sich dadurch aus, dass hier nur eine minimale Energie aus der Batterie entnommen werden muss, um die entsprechende Überwachung auch über lange Zeit durchführen zu können, ohne dass die Batterie tief entladen wird. Ein weiterer Vorteil hiervon ist, dass in derartigen Tiefschlafmodi die Leistungsabgabe des Batteriemoduls auf einen Bruchteil der Nennleistung der Batterie begrenzt sein kann. Selbst wenn das Batteriemodul z.B. durch einen beliebigen Fehler kurzgeschlossen wird, können so in der Regel hohe Stromflüsse und damit die Erzeugung von Wärme, die Entstehung eines Brandes usw. vermieden werden. Auch steht hier noch ausreichend Zeit zur Verfügung, um einen entsprechenden Fehlerzustand zu erkennen, und den Roboter bzw. das Batteriemodul noch rechtzeitig einem Service zu unterziehen, um eine letztendliche Tiefentladung und damit einen Defekt des Batteriemoduls zu vermeiden.

Die Aufgabe der Erfindung wird auch gelöst durch eine Roboteranordnung gemäß Patentanspruch 12. Diese enthält den erfindungsgemäßen Roboter in der Ausprägung mit einer Schnittstelle wie oben erläutert, und eine Ladestation für den Roboter. Die Ladestation weist als passendes Gegenstück zur Schnittstelle eine Gegenschnittstelle zur Bereitstellung elektrischer Energie auf. Der Roboter ist derart an der Ladestation ankoppelbar, dass die Schnittstelle aus der Gegenschnittstelle mit elektrischer Energie versorgbar bzw. im Betrieb der Ladestation tatsächlich mit elektrischer Energie versorgt ist.

Hierdurch wird ermöglicht, dass ein Wecksignal immer dann erzeugt wird, wenn der Roboter mit seiner Schnittstelle an die Gegenschnittstelle angekoppelt wird, welche elektrische Energie tatsächlich bereitstellt oder wenn - bei bereits angekoppeltem Roboter - die Gegenschnittstelle mit der Bereitstellung elektrischer Energie beginnt. Insbesondere erzeugt also der Moment des Ankoppelns des Roboters an die Ladestation / das Bereitstellen elektrischer Energie an der Gegenschnittstelle und damit an der Schnittstelle das Wecksignal. Hierbei handelt es sich um eine besonders einfache und intuitive Möglichkeit, das Wecksignal zu erzeugen.

Die Roboteranordnung und zumindest ein Teil deren möglicher Ausführungsformen sowie die jeweiligen Vorteile wurden sinngemäß bereits im Zusammenhang mit dem erfindungsgemäßen Roboter erläutert.

Die Aufgabe der Erfindung wird auch gelöst durch ein Verfahren gemäß Patentanspruch 13 zum Betreiben des erfindungsgemäßen Roboters oder der erfindungsgemäßen Roboteranordnung. Bei dem Verfahren wird das Wecksignal ohne die Nutzung von Energie aus der Batterie erzeugt.

Das Verfahren und zumindest ein Teil dessen möglicher Ausführungsformen sowie die jeweiligen Vorteile wurden sinngemäß bereits im Zusammenhang mit dem erfindungsgemäßen Roboter und der erfindungsgemäßen Roboteranordnung erläutert.

In einer bevorzugten Ausführungsform des Verfahrens wird das Batteriemodul nach einer oder am Ende einer Fertigung des Roboters in einer Fertigungsstätte und vor der Lagerung des Roboters in der Fertigungsstätte und oder vor der Auslieferung des Roboters aus der Fertigungsstätte in den Tiefschlafmodus versetzt. Somit ist sichergestellt, dass vor und während der Lagerung und / oder Auslieferung des Roboters der Energieverbrauch im Batteriemodul gesenkt und damit die Gefahr einer Tiefentladung und eines Defekts des Batteriemoduls reduziert wird.

In einer bevorzugten Variante dieser Ausführungsform wird das Batteriemodul innerhalb eines End-of-Line-Tests des Roboters in den Tiefschlafmodus versetzt. Dieser Test schließt sich an die eigentliche Fertigung des Roboters an bzw. bildet - in einer alternativen Betrachtungsweise - den abschließenden Schritt der Fertigung. Da ein entsprechender End-of-Line-Test sich in der Regel - auch im Sinne eines letzten Fertigungsschrittes - unmittelbar an die eigentliche Fertigung des Roboters anschließt, kann das Versetzen in den Tiefschlafmodus einerseits nicht vergessen werden und erfolgt auch unmittelbar bzw. unverzüglich nach bzw. bei Abschluss der Fertigung des Roboters.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Als Beispiel für einen in Rede stehenden Roboter soll ein Haushaltsroboter dienen; die folgenden Aussagen gelten jedoch allgemein für alle in Rede stehenden Roboter. Die Erfindung beruht auf folgenden Beobachtungen:
Autonome Reinigungsroboter reinigen selbstständig alle erreichbaren oder von einem Nutzer vorgegebenen Flächen einer Wohnung und können dem Nutzer auf diese Weise viel Arbeit abnehmen. Um eine möglichst große Reichweite zu haben und nicht durch ein Stromversorgungskabel eingeschränkt zu sein, besitzen diese Roboter in der Regel eine Batterie, insbesondere einen (wieder aufladbaren) Akku, z.B. einen Lithium-Ionen-Akku (Li-Ionen-Akku). Der Roboter kann diesen Akku an seiner Basisstation, die als Ladestation fungiert, wieder laden / auffüllen und ist in dieser Hinsicht vom Nutzer unabhängig. Ein derartiger Akku ist z.B. in einer Unterschale des Roboters verschraubt.

Die Zellen eines Akkupacks (Batteriemoduls) unterliegen im Allgemeinen stets einer gewissen Selbstentladung, so dass der Ladestand auch ohne aktiven Betrieb des Roboters über die Zeit (sehr) langsam, aber stetig absinkt. Einen weiteren, im Vergleich zur Eigenentladung größeren Anteil an der Entladung des Akkus ohne aktiven Betrieb des Roboters hat ein Batteriemanager, auch Battery Management System (BMS) genannt, das - im regulären Betrieb - dauerhaft eine Überwachung der Zellen des Batteriemoduls durchführt und dadurch einen geringen, aber doch nennenswerten, Stromverbrauch zur Folge hat. Der Einfluss des BMS wirkt sich auch auf die Lagerungsdauer des Akkus aus. Unterschreitet der Ladestand eines Li-lonen-Akkus einen kritischen Wert, so muss der Akku (durch das BMS) evtl. dauerhaft deaktiviert werden und kann nicht mehr reaktiviert werden. Trifft dies ein, bevor ein Roboter - nach dessen Produktion bzw. Herstellung bei einem Produzenten / Hersteller - mit eben diesem Akku an einen Kunden verkauft wurde, so kann der Roboter nicht genutzt werden und der Akku muss getauscht werden. Zur Vermeidung dieses Problems ist es denkbar, betroffene Roboter während ihrer Lagerung (zwischen Herstellung und Verkauf / Auslieferung an einen Verbraucher / Endkunden) nachzuladen, d. h. die Roboter müssen ausgepackt, aufgeladen und wieder verpackt werden, damit die Akkuspannungen während der weiteren Lagerung nicht in den kritischen Bereich abfallen.

Es sind jedoch auch BMS aus der Praxis bekannt, die in verschiedene Stand-by-Modi versetzt werden können, um den Verbrauch zu reduzieren. Für eine Langzeitlagerung oder einen Transport ist ein Modus, in dem nur die nötigsten Werte der Akkuzellen geprüft werden, ausreichend, so dass der Verbrauch minimiert und dadurch die Lagerzeit maximiert werden kann. In einem solchen Zustand muss das BMS jedoch aktiv gesetzt werden (der Tiefschlafzustand beendet werden), denn ohne Einwirkung von außen bleibt ein BMS in seinem derzeitigen Zustand. In diesem Zustand, welcher Tiefschlaf genannt wird, kann der Akku nicht verwendet werden.

Ein Roboter wird in der Regel am Ende seiner Fertigung nach der Montage auf das korrekte Funktionieren geprüft, dafür werden die sogenannten End-of-Line-Tests durchgeführt. Für diesen Testschritt wird der Akku bereits in den Roboter eingesetzt und versorgt den Roboter während der Testprozeduren mit Spannung bzw. Energie. Falls der Akku bzw. das BMS zuvor in einem Niedrigverbrauchszustand war (Tiefschlaf, i. d. R. gesetzt beim Batteriefertiger), wird dieser jetzt aufgeweckt und die Entladung kann beginnen. Eine längere Lagerung des Roboters in diesem Zustand ("aufgeweckt", also kein Tiefschlafmodus) kann - wie oben erläutert - zu einem tief entladenen Akku beim Nutzer führen. Eine denkbare, alternative Vorgehensweise, bei der in alle montierten Roboter für den End-of-Line-Test immer der gleiche, ein sogenannter "Fertigungsdummy"-Akku (manuell) eingebaut und anschließend wieder (manuell) ausgebaut und (ebenfalls manuell) durch einen Akku im Niedrigverbrauchszustand (Tiefschlafmodus) ersetzt wird, ist zeitaufwendig und daher nur bedingt für eine Fertigungslinie geeignet.

Die vorliegende Erfindungsmeldung beschreibt eine Idee, die Entladung des Akkus, durch Einstellen eines Tiefschlafmodus des im Roboter verbauten Akkus, zu reduzieren. Die Erfindung beruht dabei auf folgenden Erkenntnissen:
Akkumulatoren (kurz Akkus) bzw. Batteriepacks (Batteriemodule) besitzen immer öfter bereits ein Battery Management System (BMS), das in der Lage ist, in einen Schlafmodus (Sleep Mode, Low-power Mode, Hibernate Mode, Power-down Mode usw.; hier stets "Tiefschlafmodus" genannt) zu wechseln. In diesem wird der Verbrauch des BMS (und somit der "Eigenverbrauch" des Akkus, also des gesamten Batteriemoduls, umfassend die Batterie / den Akku sowie den Batteriemanager / das BMS) auf einen Bruchteil der normalen Werte (kein Tiefschlaf) reduziert, indem Funktionen im BMS abgeschaltet oder reduziert werden. Dazu zählt unter anderem, dass das BMS nur noch die nötigsten Werte der Akkuzellen (z.B. Spannung, Temperatur) und eventuell nur noch in bestimmten Zeitabständen überwacht (Intervallbetrieb, z. B. Abfrage und Auswertung der Werte Spannung / Temperatur nur noch einmal pro Tag).

Ein (Tief-)Schlafmodus dient dabei nicht nur dem verringerten Verbrauch, sondern stellt auch eine Sicherheitsfunktion dar, da der Akku in diesem Modus keine signifikante Leistung mehr abgibt bzw. abgeben kann (Ausgangsleistung des Batteriemoduls ist begrenzt) und somit das Risiko von Kurzschlüssen oder Überlastungen (des Batteriemoduls und damit der Batterie) reduziert wird.

An den Akkus (bzw. deren BMS) sind dazu in der Regel extra Signalleitungen vorgesehen, mit denen dem BMS ein Befehl (Schlafsignal) übermittelt werden kann, in den Schlafmodus zu wechseln.

Ein Rückwechsel in den Betriebs- bzw. Wach- oder Leistungsmodus erfolgt auf verschiedene Wege, entweder durch ein entsprechendes konkretes Wecksignal auf einer passenden Signalleitung oder beispielsweise durch das Anlegen einer Spannung oder eines Stromes (z. B. beim Laden des Akkus) an das Batteriemodul (internes Wecksignal).

Ein in einem Reinigungsroboter verbauter Akku kann nicht ohne weiteres in einen Schlafmodus wechseln oder aus diesem aufwachen, da ein Zusammenspiel mit der Roboterelektronik und der Ladestation abgestimmt werden muss.

Denkbar wäre es auch, den Stromverbrauch in der Anwendung, hier ein Roboter, zu messen und aufgrund einer Unterschreitung eines Schwellwertes dann durch das BMS die Zellen von der Anwendung elektrisch zu trennen, damit es zu keiner weiteren Entladung kommen kann. Hierbei gestaltet sich vor allem das Auslegen der Schwellwerte samt Toleranzen als sehr herausfordernd. Insbesondere dann, wenn die Anwendung auch Zustände/Modi kennt, in welchen die Leistungsaufnahme sehr gering ist, zum Beispiel im Fall, wenn alle Aktoren aus sind und nur "connected"-Dienste (z. B. eine WiFi-Verbindung für Bediengerät-Applikationen) und/oder ein Display eingeschaltet sind, kann es zu Abschaltungen kommen. Ebenfalls kann diese Realisierung beim Aufwecken, wenn anfangs nur ein geringer Strom entnommen wird, zu einem ungewollten Abschalten führen. Zudem benötigt diese Realisierung einen Strombedarf, welcher die Akkuzellen zusätzlich zur Anwendung entlädt. All dies ist durch die Erfindung vermieden.

Die Erfindung beruht auf der Idee, den Tiefschlaf-Modus eines Batteriemoduls nach dem Einbau in den Roboter durch ein insbesondere manuelles von einem Bediener ausgelöstes Signal zu aktivieren. Dieses Vorgehen soll sicherstellen, dass das Batteriemodul weder versehentlich in den Schlafmodus wechselt, wenn der Roboter beim Nutzer im Einsatz ist, noch, dass das Batteriemodul den Schlafmodus verlässt, wenn der Roboter transportiert oder gelagert wird.

Als Lösung wird dazu vorgesehen, dass der Roboter wie folgt eingerichtet ist und somit dass z. B. die Steuerung des Roboters ein entsprechendes Signal an das Battery Management System (BMS) des Batteriemoduls sendet, wenn ein Bediener am Roboter entweder auf dem lokalen User Interface (Bedienelemente) beispielsweise eine bestimmte Tastenkombination drückt bzw. eine definierte Betätigungsreihenfolge für einige Tasten durchführt oder wenn in der zum Roboter zugehörigen App (auf einem vom Roboter verschiedenen Bediengerät laufende Applikation) eine passende Schaltfläche gedrückt / bestätigt wird. Das BMS lässt das Batteriemodul solange im Tiefschlaf-Modus, bis der Roboter auf seine Ladestation gesetzt wird und dort ein Ladevorgang gestartet wird. Es ist zu erwarten, dass ein Nutzer diesen Schritt beim Einrichten des Roboters nach dem Kauf als erstes durchführt, so dass der Roboter dem Nutzer anschließend uneingeschränkt zur Verfügung steht. Nichtsdestotrotz kann ein Hinweis in der Anleitung des Roboters darauf aufmerksam machen, dass der Roboter erst nach dem ersten Laden zur Verfügung steht. Ein solcher Hinweis ist z. B. ein Papier-Beileger ("erste Schritte") in der Verpackung des Roboters, Hinweise in der Betriebsanleitung, ein Hinweis in der App bei Beginn der Einrichtung des Roboters, ein ablösbarer Aufkleber nahe des Hauptschalters oder des User Interfaces des Roboters; jeweils mit dem Hinweis, den Roboter im ersten Schritt auf die Lade-/ Basisstation zu setzen, um einen Akkuschonenden Schlafmodus zu beenden und eine Nutzung zu ermöglichen. So könnten z. B. Kundendienstreklamationen ("Roboter geht nicht") vermieden werden, wenn der Akku sich im Tiefschlaf befindet.

Ein weiterer Vorteil hierbei ist, dass das Akkusystem erstmalig nach der Lagerung bzw. des Transportes geladen wird und somit ein vollständiges Aufladen zum Ermitteln bzw. der Kalibration des Ladezustandes zuverlässig herangezogen werden kann. Vor allem wenn das Akkusystem eine sogenannte "Coulomb-Counter-Ermittlung" umsetzt, ist durch die Selbstentladung und den Betriebsstrom des BMS während der Lagerung und des Transportes der aktuelle Füllstand, bzw. die eingelagerte Ladung nicht genau bekannt. Nach dem Ladevorgang kann der Ladezustand angepasst bzw. als neuer Referenzwert übernommen werden.

Nachdem der Roboter nach seiner Montage im Rahmen der Fertigung alle Funktionstests des End-of-Line-Tests (EoL) durchlaufen hat, kann das Signal entweder durch einen Fertigungsmitarbeiter ausgelöst werden, der die entsprechende Tastenkombination bzw. - reihenfolge drückt oder der mittels verbundenem Mobilgerät und App das Signal sendet, bevor der Roboter verpackt und abtransportiert wird. Ebenso ist denkbar, dass bei einem vollautomatisierten EoL-Test in einem EoL-Automat der Automat selbst diese Schritte durchführt, bspw. durch einen Roboterarm zur Betätigung der Tasten, einer Kabelverbindung oder mittels Funksignal als Alternative für eine App. Der Reinigungsroboter wird in diesem Fall nach dem erfolgreichen Absolvieren der Qualitätssicherungstests in den Schlafmodus versetzt, sodass die verbleibende Ladung im Batteriemodul des Roboters während der Lagerung kaum absinkt und somit auch längere Lagerungen oder Transportwege ermöglicht ohne eine kritische Untergrenze zu unterschreiten.

Eine weitere Anwendung für einen (Tief-)Schlafmodus von Roboter bzw. Batteriemodul sind längere Abwesenheiten (z. B. Urlaub oder Umzug) des Nutzers, in denen der Nutzer den Roboter nicht nutzen will oder sichergehen will, dass während seiner Abwesenheit keine Vorkommnisse passieren. Der Nutzer kann den Roboter in diesem Fall ebenso per lokalem User Interface (Bedienelemente) oder mittels App (Signalempfänger) in den Tiefschlafmodus versetzen und später wieder "aufwecken", indem der Roboter auf seine Ladestation gesetzt wird.

Die Tastenkombination bzw. -reihenfolge ist dabei insbesondere so zu wählen, dass sie nicht aus Versehen betätigt werden kann. Dafür kann z. B. in einem ersten Schritt das gleichzeitige Drücken bestimmter Tasten (Bedienelemente) für eine gewisse Zeitdauer und anschließend das (gleichzeitige oder nacheinander erfolgende) Drücken anderer Tasten sinnvoll sein. Mit anderen Worten können insbesondere die Tasten des User Interfaces des Roboters genutzt werden, um mittels Tastenkombination den Schlafmodus des BMS im Akku zu aktivieren.

In einer zum Roboter zugehörigen App auf einem Mobilgerät kann eine entsprechende Schaltfläche sehr einfach realisiert werden. Vorzugsweise befindet sich diese Schaltfläche in einem untergeordneten Einstellungsmenü, um versehentliches Betätigen zu verhindern. Eine Aktivierung des (Tief-)Schlafmodus für das BMS des Roboter-Akkus ist insbesondere daher auch über eine App-Steuerung möglich.

Ein Roboter, z. B. Reinigungsroboter zur Realisierung der vorgeschlagenen Funktion kann insbesondere neben einem Akkupack (Batteriemodul) mit einen zu einem Tiefschlaf-Modus fähigen BMS auch ein lokales User Interface mit Tasten und/oder ein Funkmodul zur Kommunikation mit einer App auf einem Mobilgerät haben. Weiterhin kann der Roboter insbesondere eine Steuerung umfassen, die den Befehl des Bedieners entgegennehmen und in ein Kommando (Weck-/ Schlafsignal) für das BMS des Batteriemoduls umwandeln kann.

Das Batteriemodul bleibt insbesondere solange im aktiven Betriebsmodus, wie eine Spannung an einem Schaltkreis des BMS anliegt. Das BMS ist auch im (Tief-)Schlafmodus selbst in der Lage, diesen Schaltkreis zu aktivieren (z. B. wenn es Testroutinen an den Akkuzellen durchführen möchte oder eben, um den Schlafmodus zu verlassen) (oder es erfolgt eine Aktivierung, wenn ein entsprechendes mit eigener Energie der Batterie gespeistes Signal von außen gegeben wird, was in der vorliegenden Erfindungsmeldung jedoch nicht zum Tragen kommt). Soll das Batteriemodul für einen Transport oder eine Lagerung in den Schlafmodus versetzt werden, so wird der genannte Stromkreis deaktiviert, indem ein Signal der Roboter-Steuerung an das BMS gesendet wird. Das BMS überwacht dann nur noch die nötigsten Werte der Akkuzellen und spart somit Strom. Eine Reaktivierung erfolgt nur, wenn der Roboter auf die Ladestation gesetzt wird, sodass ein Ladestrom in die Akkuzellen fließt, den das BMS registriert und somit die Rückkehr in den Betriebsmodus veranlasst. Die Reaktivierung kann ebenfalls durch das Anlegen der Ladespannung erfolgen. Hierbei ist es nicht zwingend notwendig, dass ein Ladestrom fließt. Des Weiteren ist zu ergänzen, dass in diesem Betriebszustand die Energieversorgung für das BMS aus dem Ladestrom des Ladegeräts oder den Zellen entnommen werden kann.

Der Aufbau eines geeigneten BMS für einen akkubetriebenen Saugroboter setzt sich insbesondere wie folgt zusammen: Das BMS umfasst im Wesentlichen eine sogenannte "first stage protection", eine "second stage protection" und eine Kommunikationseinheit bestehend aus i. d. R. einem Mikrocontroller und einem Kommunikationstreiber. Wie bereits oben erwähnt, ist es sinnvoll, um den Stromverbrauch im Lager- bzw. Tiefschlafmodus zu reduzieren, einige, im Tiefschlaf nicht relevante, Funktionen stillzulegen. Hierbei ist es jedoch vorteilhaft, nicht sämtliche Batterieüberwachungsfunktionen zu deaktivieren.

Eine mögliche und sinnvolle Realisierungsvariante könnte somit folgendermaßen aussehen: Nachdem der Tiefschlaf aktiviert wurde, werden die Kommunikationseinheit und die "first stage protection" in den Tiefschlaf versetzt. Die "second stage protection" bleibt weiterhin bei einem sehr niedrigen Betriebsstrom aktiviert. Eine sogenannte "second stage protection" beherbergt beispielsweise einen Überladeschutz und einen Temperaturschutz für die Zellen. Ein Schutz gegen Unterspannung wird damit nicht realisiert, jedoch könnte während der Lagerung des Roboters ohnehin keine Gegenmaßnahme ergriffen werden. Stattdessen muss eine Prüfung auf einen zu niedrigen, kritischen Spannungspegel im Rahmen eines Aufwachkonzeptes realisiert werden. Durch die extreme Reduzierung des Stromverbrauchs im Tiefschlafmodus (nur "second stage protection" aktiv) auf wenige Mikroampere kann von einer mehrjährigen, problemlosen Lagerdauer ausgegangen werden. Diese technische Umsetzung bzw. dieses Realisierungsbeispiel ist besonders günstig, da die "first stage protection" und die Kommunikationseinheit den höchsten Betriebsstromverbrauch im Vergleich zum "second stage protection"-Schaltkreis haben. Somit werden die nicht benötigten Funktionen mit dem gleichzeitig höchsten Stromverbrauch deaktiviert.

Gemäß der Erfindung ergeben sich damit folgende Vorteile:
- Der Stromverbrauch des BMS wird auf ein absolutes Minimum reduziert, so dass sich eine längere Lagerung des Roboters ermöglicht, ohne eine Beschädigung der Akkuzellen zu riskieren.
- Die Erfindung reduziert die Gefahr einer versehentlichen Aktivierung des Schlafmodus (während des Einsatzes beim Nutzer). Der Roboter bzw. das BMS kann nur durch bewusstes Handeln des Bedieners in den Schlafmodus wechseln (durch Eingabe mittels Tastenkombination oder per App).
- Die Erfindung reduziert die Gefahr einer versehentlichen Deaktivierung des Schlafmodus (während Transport oder Lagerung). Der Roboter bzw. das BMS kann nur durch bewusstes Handeln des Bedieners reaktiviert werden (Aufsetzen des Roboters auf die Lade-/ Basisstation).
- Besonders vorteilhaft ist, dass keine Energie aus den Zellen entnommen wird, um den Aufwachvorgang zu starten, da die Energie aus dem Ladegerät (Schnittstelle) entnommen wird; im Gegensatz zu einem Aufwecken über einen Taster/Schalter am Roboter, der aus der Batterie versorgt werden müsste. Vor allem ist hierbei zu beachten, dass ein ständiger Entladestrom fließen könnte, wenn der Taster beabsichtigt (Kunde) oder unbeabsichtigt (Karton, Verpackung, Transport) öfters, oder dauerhaft betätigt wird.
- Das BMS kann natürlich weiterhin, beispielsweise beim Unterschreiten einer Spannungsschwelle vom Roboter selbst initiiert in den Tiefschlaf versetzt werden. Z. B. für den Fall, dass der Roboter nicht auf die Ladestation findet, oder der Ladezustand zu gering ist, um zur Station zurückzufahren, oder, wenn die Station nicht mit dem Netz verbunden ist (ausgesteckt, Stromausfall).
- Der Nutzer kann den Roboter mittels Befehl in der App auch aus der Ferne deaktivieren falls nötig (wenn der Roboter nicht gerade an der Ladestation steht (siehe unten) - was z. B. per GoTo-Befehl ebenfalls einfach aus der Ferne zu erreichen ist).
- Bei Realisierung einer automatischen Initialisierung des Tiefschlafmodus am End-of-Line-Automaten am Ende der Fertigung wird bei jedem Roboter sichergestellt, dass er sich im Transportmodus befindet. Ein versehentliches Vergessen (und Verschicken des Roboters im aktiven Zustand) kann ausgeschlossen werden.

Für den Fall, dass der Roboter auf der Ladestation steht (Energie steht an der Schnittstelle bereit) und ein Tiefschlafmodus aktiviert wird (Schlafsignal), sind folgende Lösungen denkbar: Im einfachsten Fall erfolgt eine sofortige Reaktivierung (Wecksignal), da das BMS im gerade aktivierten Schlafmodus sofort wieder mit Strom versorgt wird. Möglich wäre natürlich, dass sich der Schlafmodus nur aktivieren lässt, wenn Akku nicht gerade geladen wird. Auch denkbar ist, dass eine Schaltung zur Realisierung einer Zustandsmaschine eingebaut wird, damit das BMS nicht sofort auf anliegenden Strom reagiert, sondern erst, wenn dieser zwischendurch nicht anlag und später wieder angelegt wird - man müsste den Roboter dann erst von der Basisstation herunternehmen und wieder dorthin zurücksetzen, um den Roboter zu aktivieren. Auch ist denkbar, dass nur auf den ersten Impuls (angedockt, Ladegerät verbunden, Schnittstelle mit Energie versorgt) getriggert wird. Diesen Impuls gibt es nur beim Andocken (bzw. unmittelbar danach). Ein dauerhaftes Anlegen / Laden löst jeweils nur einen Impuls aus. Nach einer kurzen Verweildauer im abgedockten Zustand kann der Impuls erneut generiert werden. Auch denkbar ist, dass eine Softwarefunktion den Zustand "Laden" erkennt und den Abschaltwunsch (Schlafsignal) nicht weiterleitet.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: eine erfindungsgemäße Roboteranordnung,
- Figur 2: ein Ablaufdiagramm für ein Verfahren zum Betreiben des Roboters aus Figur 1

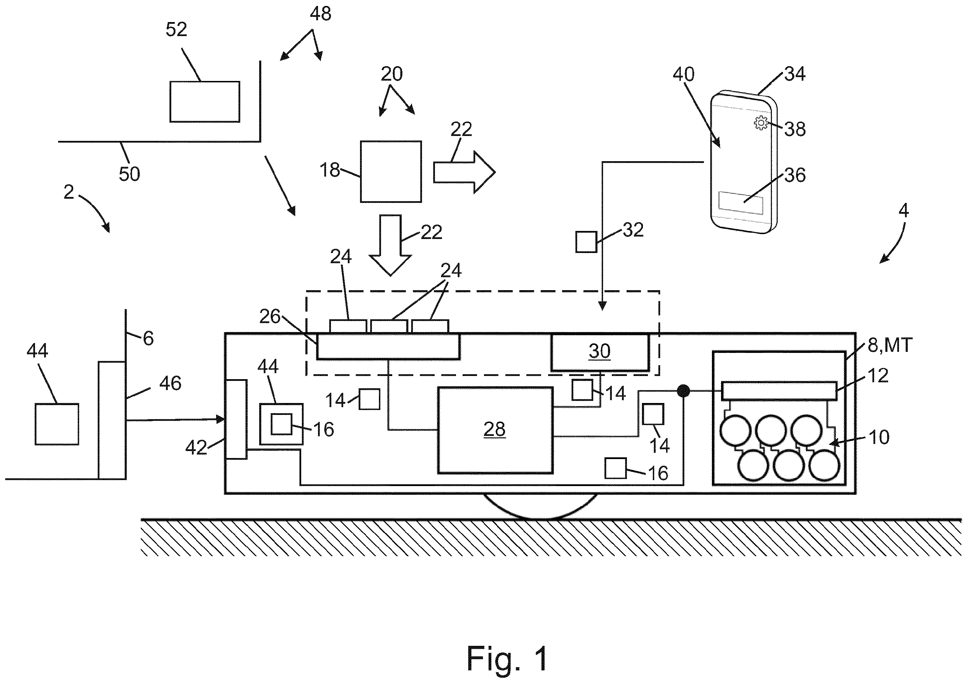

Figur 1 zeigt eine Roboteranordnung 2. Diese enthält einen Roboter 4 sowie eine Ladestation 6 für den Roboter 4. Der Roboter 4 enthält ein Batteriemodul 8. Das Batteriemodul 8 enthält eine wiederaufladbare Batterie 10 sowie einen Batteriemanager 12. Die Batterie 10 ist hier durch sechs nicht näher erläuterte Batteriezellen symbolisch dargestellt.

Der Batteriemanager 12 ist dazu eingerichtet, auf ein Schlafsignal 14 hin das Batteriemodul 8 in einen Tiefschlafmodus MT zu versetzen und auf ein Wecksignal 16 hin den Tiefschlafmodus MT zu beenden. Der Roboter 4 ist dazu eingerichtet, das Wecksignal 16 ohne die Nutzung von Energie aus der Batterie 10 zu erzeugen. Im Tiefschlafmodus MT ist der Eigenverbrauch des Batteriemanagers 12 von elektrischer Energie gegenüber dem Nicht-Tiefschlafmodus erheblich gesenkt. So lange dem Roboter 2 keine elektrische Energie von außen zugeführt wird, muss dieser Energiebedarf aus der Batterie 10 gedeckt werden.

Der Roboter 4 enthält ein von einem Benutzer 18 bedienbares Eingabemodul 20. Der Roboter 4 ist dazu eingerichtet, das Schlafsignal 14 dann zu erzeugen, wenn am Eingabemodul 20 eine Schlafeingabe 22 erfolgt. Die Schlafeingabe 22 ist hier durch einen Pfeil symbolisch dargestellt und ist eine Tätigkeit, die im Beispiel der Benutzer 18 ausführt. Das Eingabemodul 20 enthält drei von dem Benutzer 18 manuell betätigbare Bedienelemente 24, hier in Form von Tasten als Teil einer Benutzerschnittstelle / eines User Interfaces / einer Bedienschnittstelle 26 am Roboter 4. Eine spezielle Betätigung der Bedienelemente 24, insbesondere durch den Benutzer 18 stellt eine Schlafeingabe 22 dar. Die Schlafeingabe 22 erfordert hierzu, dass die Bedienelemente 24 nach einem bestimmten Bedienmuster bedient werden, hier innerhalb von zwei Sekunden zunächst die linken beiden, dann die rechten beiden Tasten in Figur 1 gedrückt und wieder losgelassen werden. Das Bedienmuster bzw. die Bedienung oder Betätigung der Bedienelemente 24 nach dem Bedien- oder Eingabemuster stellt dann die Schlafeingabe 22 dar. Nach dem Drücken der entsprechenden Tasten, also der erfolgreichen Schlafeingabe 22 wird das Schlafsignal 14 erzeugt und an das Batteriemodul 8 übermittelt, welches hierauf in den Tiefschlafmodus MT wechselt. Die Auswertung der Betätigung der Bedienelemente 24, d. h. die Überprüfung der Schlafeingabe 22 erfolgt durch eine hier nicht näher erläuterte Steuerung 28 des Roboters 4.

Das Eingabemodul 20 enthält weiterhin einen Signalempfänger 30. Dieser ist dazu eingerichtet, ein von einem Benutzer 18 erzeugbares Eingabesignal 32 zu empfangen. Der Roboter 4 ist weiterhin dazu eingerichtet, das Schlafsignal 14 dann zu erzeugen, wenn das Eingabesignal 32 vom Signalempfänger 30 empfangen wird. Der Signalempfänger 30 ist hier ein Drahtlosempfänger und das Eingabesignal 32 ein Drahtlossignal, hier auf WLAN-Basis.

Der Signalempfänger 30 ist dazu eingerichtet, das Eingabesignal 32 von einem Bediengerät 34 zu empfangen, das von einem Benutzer 18 mit einer weiteren Schlafeingabe 22 bedienbar ist. Das Bediengerät 34 ist vom Roboter 4 verschieden. Das Bediengerät 34 ist hier ein handgeführtes Bediengerät, im Beispiel ein Smartphone, das der Benutzer 18 mit sich führt. Die Schlafeingabe 22 am Bediengerät 34 erfolgt dadurch, dass der Benutzer 18 einen Funktionsknopf 36 in einem Einstellungsmenü 38 (dargestellt durch ein Zahnrad) einer Applikation 40 (hier Smartphone-App) betätigt. Das Einstellungsmenü ist ein sogenanntes Set-up Menü. In der Applikation 40 wird folgender Text angezeigt: "Langzeit-Lagerung. Tiefschlafmodus für Roboter-Akku aktivieren". Der Funktionsknopf 36 trägt die Beschriftung "aktivieren".

Auch durch diese Schlafeingabe 22 wird also letztendlich das Schlafsignal 14 im Roboter 4 erzeugt und das Batteriemodul 8 in den Tiefschlafmodus MT versetzt.

Der Roboter 2 enthält eine elektrische Schnittstelle 42. Diese ist dazu eingerichtet, das Batteriemodul 8 mit elektrischer Energie 44 zu versorgen, die dem Roboter 4 von außen, also von außerhalb des Roboters 4, an der Schnittstelle 42 bereitgestellt wird. Der Roboter 4 ist dazu eingerichtet, das Wecksignal 16 dann zu erzeugen, wenn die Schnittstelle 42 mit der elektrischen Energie 44 versorgt wird. Die elektrische Energie für die Erzeugung des Wecksignals 16 wird hierbei von der Schnittstelle 42 bereitgestellt, ist also ein Teil der dargestellten Energie 44, welche ansonsten dem Aufladen / der Ladeerhaltung des Batteriemoduls 8 bzw. der Batterie 10 dient. Die Ladestation 6 weist eine Gegenschnittstelle 46 für die Schnittstelle 42 auf. Die Gegenschnittstelle 46 dient zur Bereitstellung der elektrischen Energie 44. Der Roboter 4 ist an die Ladestation 6 derart ankoppelbar, dass die Schnittstelle 42 aus der Gegenschnittstelle 46 mit der elektrischen Energie 44 versorgt wird bzw. versorgbar ist. Das Wecksignal 16 wird also ohne Nutzung von elektrischer Energie aus der Batterie 10 erzeugt, da die elektrische Energie Teil der Energie 44 aus der Gegenschnittstelle 46 bzw. von der Schnittstelle 42 ist.

Der Batteriemanager 12 ist dazu eingerichtet, im Tiefschlafmodus MT in zeitlichen Intervallen, bevorzugt einmal täglich, lediglich eine Überwachung einer Spannung und einer Temperatur der Batterie 10 durchzuführen.

Figur 1 zeigt auch symbolisch eine Fertigungsstätte 48 für den Roboter 4, hier ein Werk eines Herstellers des Roboters 2. Enthalten ist eine Fertigungslinie 50 für Roboter 4, an deren Ende ein End-of-Line-Test 52 am soeben fertig gestellten Roboter 4 durchgeführt wird. Am Ende der Fertigung des Roboters 4 mithilfe der Fertigungslinie 50 wird der Roboter 4 bzw. dessen Batteriemodul 8 in den Tiefschlafmodus MT versetzt. Dies geschieht innerhalb des bzw. als letzter Schritt des End-of-Line-Tests 52. Anschließend wird der Roboter 4 in der Fertigungsstätte 48 gelagert und später an einen Endkunden ausgeliefert.

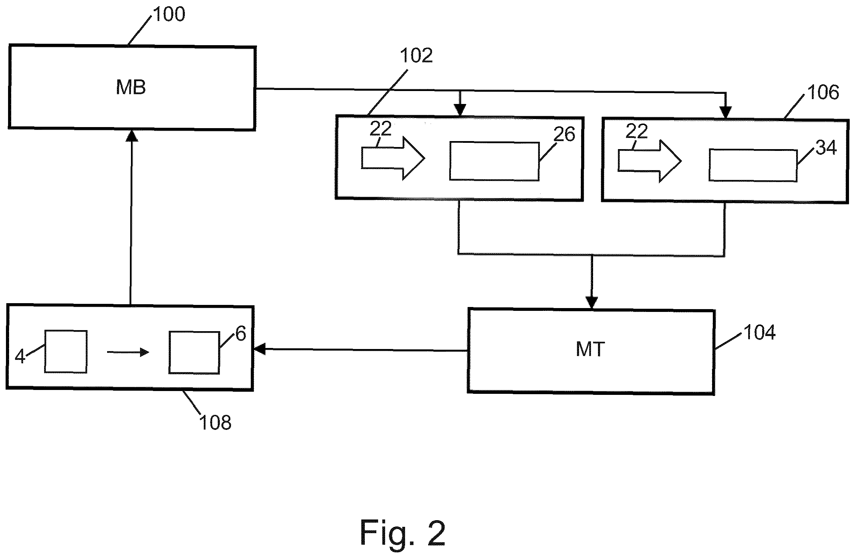

Figur 2 zeigt einen prinzipiellen Ablauf des Wechsels zwischen Betriebsmodus MB (kein Tiefschlafmodus MT) des Batteriemanagers 12 und Tiefschlafmodus MT (mit verringerter Selbstentladung des Batteriemoduls 8). In einem Zustand 100 befindet sich der Batteriemanager 12 und damit das Batteriemodul 8 im Betriebsmodus MB (kein Tiefschlafmodus MT). In einem Schritt 102 tätigt der Bediener eine Schlafeingabe 22 an der Bedienschnittstelle 26 (User Interface des Roboters 4), d. h. er betätigt eine Tastenkombination der Bedienelement 24. Hierauf wechselt der Roboter 2 in den Zustand 104, nämlich den Tiefschlafmodus MT. Alternativ, ausgehend vom Zustand 100, tätigt der Benutzer in einem Schritt 106 eine Schlafeingabe 22 am Bediengerät 34, indem er den Funktionsknopf 36 drückt. Auch darauf hin stellt sich der Zustand 104 ein, d. h. der Roboter 4 wechselt in den Tiefschlafmodus MT.

Um den Roboter 2 vom Zustand 104 wieder in den Zustand 100 zu bringen, koppelt der Benutzer den Roboter 4 mit der Ladestation 6, so dass die Schnittstelle 42 aus der Gegenschnittstelle 46 mit Energie 44 versorgt wird. Mit anderen Worten sorgt der Benutzer dafür, dass die Batterie 10 mit Energie 44 geladen wird. Dies löst im Roboter 4 das Wecksignal 16 aus und dieser kehrt in den Betriebsmodus MB zurück, d. h. er verlässt den Tiefschlafmodus MT.

### Bezugszeichenliste

- 2: Roboteranordnung
- 4: Roboter
- 6: Ladestation
- 8: Batteriemodul
- 10: Batterie
- 12: Batteriemanager
- 14: Schlafsignal
- 16: Wecksignal
- 18: Benutzer
- 20: Eingabemodul
- 22: Schlafeingabe
- 24: Bedienelement
- 26: Bedienschnittstelle
- 28: Steuerung
- 30: Signalempfänger
- 32: Eingabesignal
- 34: Bediengerät
- 36: Funktionsknopf
- 38: Einstellungsmenü
- 40: Applikation
- 42: Schnittstelle (elektrisch)
- 44: Energie (elektrisch)
- 46: Gegenschnittstelle
- 48: Fertigungsstätte
- 50: Fertigungslinie
- 52: End-of-Line-Test

- 100: Zustand
- 102: Schritt
- 104: Zustand
- 106,108: Schritt
- MT: Tiefschlafmodus
- MB: Betriebsmodus

## Patentansprüche

1. Roboter (4),
- mit einem Batteriemodul (8), das eine Batterie (10) und einen die Batterie (10) verwaltenden Batteriemanager (12) enthält,
- wobei der Batteriemanager (12) dazu eingerichtet ist, auf ein Schlafsignal (14) hin das Batteriemodul (8) in einen Tiefschlafmodus (MT) zu setzen und auf ein Wecksignal (16) hin den Tiefschlafmodus (MT) zu beenden,
- wobei der Roboter(4) dazu eingerichtet ist, das Wecksignal (16) ohne die Nutzung von Energie aus der Batterie (10) zu erzeugen.

2. Roboter (4) nach Anspruch 1,
**dadurch gekennzeichnet, dass**
- der Roboter (4) ein von einem Benutzer (18) bedienbares Eingabemodul (20) enthält,
- wobei der Roboter (4) dazu eingerichtet ist, das Schlafsignal (14) dann zu erzeugen, wenn am Eingabemodul (20) eine vom Benutzer(18) tätigbare Schlafeingabe (22) erfolgt.

3. Roboter (4) nach Anspruch 2,
**dadurch gekennzeichnet, dass**
das Eingabemodul (20) wenigstens ein von dem Benutzer (18) betätigbares Bedienelement (24) enthält, wobei eine Betätigung des Bedienelements (24) wenigstens ein Bestandteil der Schlafeingabe (22) ist.

4. Roboter (4) nach Anspruch 3,
**dadurch gekennzeichnet, dass**
das Eingabemodul (20) wenigstens zwei von dem Benutzer (18) betätigbare Bedienelemente (24) enthält, und eine Betätigung mehrerer der Bedienelemente (24) nach einem bestimmten Bedienmuster wenigstens ein Bestandteil der Schlafeingabe (22) ist.

5. Roboter (4) nach einem der Ansprüche 2 bis 4,
**dadurch gekennzeichnet, dass**
das Eingabemodul (20) einen Signalempfänger (30) enthält, der dazu eingerichtet ist, ein von dem Benutzer (18) erzeugbares Eingabesignal (32) zu empfangen, und der Roboter (4) dazu eingerichtet ist, das Schlafsignal (14) dann zu erzeugen, wenn das Eingabesignal (32) empfangen wird.

6. Roboter (4) nach Anspruch 5,
**dadurch gekennzeichnet, dass**
der Signalempfänger (30) ein Drahtlosempfänger ist und das Eingabesignal (32) ein Drahtlossignal ist.

7. Roboter (4) nach einem der Ansprüche 5 bis 6,
**dadurch gekennzeichnet, dass**
der Signalempfänger (30) dazu eingerichtet ist, das Eingabesignal (32) von einem vom Roboter (4) verschiedenen Bediengerät (34) zu empfangen, das von dem Benutzer (18) mit der Schlafeingabe (22) bedienbar ist.

8. Roboter (4) nach Anspruch 7,
**dadurch gekennzeichnet, dass**
das Bediengerät (34) ein handgeführtes Bediengerät ist.

9. Roboter (4) nach einem der vorhergehenden Ansprüche,
**dadurch gekennzeichnet, dass**
- der Roboter (4) eine elektrische Schnittstelle (42) enthält, und dazu eingerichtet ist, das Batteriemodul (8) mit elektrischer Energie (44) zu versorgen, die dem Roboter (4) von außen an der Schnittstelle (42) bereitgestellt wird,
- wobei der Roboter (4) dazu eingerichtet ist, das Wecksignal (16) dann zu erzeugen, wenn die Schnittstelle (42) mit elektrischer Energie (44) versorgt wird.

10. Roboter (4) nach Anspruch 9,
**dadurch gekennzeichnet, dass**
die elektrische Energie für die Erzeugung des Wecksignals (16) von der Schnittstelle (42) bereitgestellt ist.

11. Roboter (4) nach einem der vorhergehenden Ansprüche,
**dadurch gekennzeichnet, dass**
der Batteriemanager (12) dazu eingerichtet ist, im Tiefschlafmodus (MT) wenigstens in zeitlichen Intervallen lediglich eine Überwachung einer Spannung und/oder einer Temperatur der Batterie (10) durchzuführen.

12. Roboteranordnung (2), mit dem Roboter (4) nach einem der Ansprüche 9 bis 11, und mit einer Ladestation (6) für den Roboter (4), die eine Gegenschnittstelle (46) zur Bereitstellung der elektrischen Energie (44) aufweist, wobei der Roboter (4) derart an der Ladestation (6) ankoppelbar ist, dass die Schnittstelle (42) aus der Gegenschnittstelle (46) mit der elektrischen Energie (44) versorgbar ist.

13. Verfahren zum Betreiben eines Roboters (4) nach einem der Ansprüche 1 bis 11 oder der Roboteranordnung (2) nach Anspruch 12, bei dem das Wecksignal (16) ohne die Nutzung von Energie aus der Batterie (10) erzeugt wird.

14. Verfahren nach Anspruch 13,
**dadurch gekennzeichnet, dass**
das Batteriemodul (8) nach oder am Ende einer Fertigung des Roboters in einer Fertigungsstätte (48) und vor seiner Lagerung in der Fertigungsstätte (48) und/oder vor seiner Auslieferung aus der Fertigungsstätte (48) in den Tiefschlafmodus (MT) versetzt wird.

15. Verfahren nach Anspruch 14,
**dadurch gekennzeichnet, dass**
das Batteriemodul (8) innerhalb eines sich an die Fertigung des Roboters (4) anschließenden oder diese abschließenden End-of-Line-Tests (52) des Roboters (4) in den Tiefschlafmodus (MT) versetzt wird.

## Claims

1. Robot (4),
- with a battery module (8), which contains a battery (10) and a battery manager (12) managing the battery (10),
- wherein the battery manager (12) is designed to put the battery module (8) into a deep sleep mode (MT) in response to a sleep signal (14) and to terminate the deep sleep mode (MT) in response to a wake-up signal (16),
- wherein the robot (4) is designed to generate the wake-up signal (16) without using energy from the battery (10).

2. Robot (4) according to claim 1,
**characterised in that**
- the robot (4) contains an input module (20) which can be operated by a user (18),
- wherein the robot (4) is designed to generate the sleep signal (14) when a sleep input (22) executable by the user (18) is carried out on the input module (20).

3. Robot (4) according to claim 2,
**characterised in that**
the input module (20) contains at least one control element (24) which can be activated by the user (18), wherein activation of the control element (24) is at least one component of the sleep input (22).

4. Robot (4) according to claim 3,
**characterised in that**
the input module (20) contains at least two control elements (24) which can be activated by the user (18), and activation of a number of control elements (24) according to a specific control pattern is at least one component of the sleep input (22).

5. Robot (4) according to one of claims 2 to 4,
**characterised in that**
the input module (20) contains a signal receiver (30) which is designed to receive an input signal (32) which can be generated by the user (18) and the robot (4) is designed to generate the sleep signal (14) when the input signal (32) is received.

6. Robot (4) according to claim 5,
**characterised in that**
the signal receiver (30) is a wireless receiver and the input signal (32) is a wireless signal.

7. Robot (4) according to one of claims 5 to 6,
**characterised in that**
the signal receiver (30) is designed to receive the input signal (32) from a control device (34) which differs from the robot (4) and can be operated by the user (18) with the sleep input (22).

8. Robot (4) according to claim 7,
**characterised in that**
the control device (34) is a hand-operated control device.

9. Robot (4) according to one of the preceding claims,
**characterised in that**
- the robot (4) contains an electrical interface (42) and is designed to supply the battery module (8) with electrical energy (44) which is provided to the robot (4) from outside at the interface (42),
- wherein the robot (4) is designed to generate the wake-up signal (16) when the interface (42) is supplied with electrical energy (44).

10. Robot (4) according to claim 9,
**characterised in that**
the electrical energy for the generation of the wake-up signal (16) is provided by the interface (42).

11. Robot (4) according to one of the preceding claims,
**characterised in that**
in the deep sleep mode (MT), the battery manager (12) is designed to carry out only a monitoring of a voltage and/or a temperature of the battery (10) at least at intervals.

12. Robot arrangement (2), with the robot (4) according to one of claims 9 to 11, and with a charging station (6) for the robot (4), which has a mating interface (46) for providing the electrical energy (44), wherein the robot (4) can be coupled to the charging station (6) so that the interface (42) can be supplied with the electrical energy (44) from the mating interface (46).

13. Method for operating a robot (4) according to one of claims 1 to 11 or the robot arrangement (2) according to claim 12, in which the wake-up signal (16) is generated without using energy from the battery (10).

14. Method according to claim 13,
**characterised in that**
the battery module (8) is put into the deep sleep mode (MT) after or at the end of production of the robot at a production site (48) and before its storage at the production site (48) and/or before its delivery from the production site (48).

15. Method according to claim 14,
**characterised in that**
the battery module (8) is put into the deep sleep mode (MT) within an end-of-line test (52) of the robot (4) which follows or concludes the production of the robot (4).

## Revendications

1. Robot (4),
- avec un module de batterie (8) qui contient une batterie (10) et un gestionnaire de batterie (12) qui gère la batterie (10),
- dans lequel le gestionnaire de batterie (12) est aménagé pour placer le module de batterie (8) dans un mode de sommeil profond (MT) en réponse à un signal de sommeil (14) et pour mettre fin au mode de sommeil profond (MT) en réponse à un signal de réveil (16),
- dans lequel le robot (4) est aménagé pour générer le signal de réveil (16) sans utiliser l'énergie de la batterie (10).

2. Robot (4) selon la revendication 1,
**caractérisé en ce que**
- le robot (4) contient un module de saisie (20) pouvant être actionné par un utilisateur (18),
- dans lequel le robot (4) est aménagé pour générer le signal de sommeil (14) lorsqu'une saisie de sommeil (22) pouvant être effectuée par l'utilisateur (18) s'opère sur le module de saisie (20).

3. Robot (4) selon la revendication 2, **caractérisé en ce que** le module de saisie (20) contient au moins un élément de commande (24) pouvant être actionné par l'utilisateur (18), dans lequel un actionnement de l'élément de commande (24) est au moins une composante de la saisie de sommeil (22).

4. Robot (4) selon la revendication 3, **caractérisé en ce que** le module de saisie (20) contient au moins deux éléments de commande (24) pouvant être actionnés par l'utilisateur (18), et un actionnement de plusieurs des éléments de commande (24) selon un schéma de commande déterminé est au moins une composante de la saisie de sommeil (22).

5. Robot (4) selon l'une des revendications 2 à 4, **caractérisé en ce que** le module de saisie (20) contient un récepteur de signaux (30) aménagé pour recevoir un signal de saisie (32) pouvant être généré par l'utilisateur (18), et le robot (4) est aménagé pour générer le signal de sommeil (14) lorsque le signal de saisie (32) est reçu.

6. Robot (4) selon la revendication 5, **caractérisé en ce que** le récepteur de signaux (30) est un récepteur sans fil et le signal de saisie (32) est un signal sans fil.

7. Robot (4) selon l'une des revendications 5 à 6, **caractérisé en ce que** le récepteur de signaux (30) est aménagé pour recevoir le signal de saisie (32) d'un appareil de commande (34) différent du robot (4), qui peut être actionné par l'utilisateur (18) avec la saisie de sommeil (22).

8. Robot (4) selon la revendication 7, **caractérisé en ce que** l'appareil de commande (34) est un appareil de commande portatif.

9. Robot (4) selon l'une des revendications précédentes,
**caractérisé en ce que**
- le robot (4) contient une interface électrique (42) et est aménagé pour alimenter le module de batterie (8) en énergie électrique (44) mise à disposition du robot (4) par l'extérieur au niveau de l'interface (42),
- dans lequel le robot (4) est aménagé pour générer le signal de réveil (16) lorsque l'interface (42) est alimentée en énergie électrique (44).

10. Robot (4) selon la revendication 9, **caractérisé en ce que** l'énergie électrique pour la génération du signal de réveil (16) est mise à disposition par l'interface (42).

11. Robot (4) selon l'une des revendications précédentes, **caractérisé en ce que** le gestionnaire de batterie (12) est aménagé pour effectuer, en mode de sommeil profond (MT), au moins à intervalles temporels, uniquement une surveillance d'une tension et/ou d'une température de la batterie (10).

12. Agencement de robot (2), avec le robot (4) selon l'une des revendications 9 à 11, et avec une station de chargement (6) pour le robot (4), qui présente une contre-interface (46) pour la mise à disposition de l'énergie électrique (44), dans lequel le robot (4) peut être couplé à la station de chargement (6) de telle sorte que l'interface (42) peut être alimentée en énergie électrique (44) à partir de la contre-interface (46).

13. Procédé d'exploitation d'un robot (4) selon l'une des revendications 1 à 11 ou de l'agencement de robot (2) selon la revendication 12, dans lequel le signal de réveil (16) est généré sans utiliser l'énergie de la batterie (10).

14. Procédé selon la revendication 13, **caractérisé en ce que** le module de batterie (8) est placé dans le mode de sommeil profond (MT) après ou à la fin d'une fabrication du robot dans un site de production (48) et avant son stockage sur le site de production (48) et/ou avant sa livraison au départ du site de production (48).

15. Procédé selon la revendication 14, **caractérisé en ce que** le module de batterie (8) est placé dans le mode de sommeil profond (MT) à l'intérieur d'un test de fin de ligne (52) du robot (4) qui suit ou termine la fabrication du robot (4).
